# EUROPEAN PATENT SPECIFICATION

(11) **EP 4 441 327 B1**
(45) Date of publication and mention of the grant of the patent: **25.02.2026**
(21) Application number: 22829914.5
(22) Date of filing: 02.12.2022
(51) Int. Cl.: E21B 17/07, F16D 3/74, F16D 3/76, F16D 3/64

(54) **SUB-ASSEMBLY, ROCK DRILLING RIG, AND METHOD OF ABSORBING VIBRATIONS IN DRILLING**
UNTERBAUGRUPPE, GESTEINSBOHRGESTELL UND VERFAHREN ZUR ABSORPTION VON VIBRATIONEN BEIM BOHREN
SOUS-ENSEMBLE, APPAREIL DE FORAGE DE ROCHE ET PROCÉDÉ D'ABSORPTION DE VIBRATIONS DANS LE FORAGE

(30) Priority: 03.12.2021 IN 202121056140
(43) Date of publication of application: 09.10.2024
(73) Proprietor: Sandvik Mining and Construction Tools AB, 811 34 Sandviken (SE)
(72) Inventor: CHAVAN, Vitthal, 81181 Sandviken (SE)
(74) Representative: Sandvik
(86) International application number: PCT/IN2022/051051
(87) International publication number: WO 2023/100198

(56) References cited:
- CA-A1- 2 638 497
- US-A- 4 759 738

## Description

### TECHNICAL FIELD OF THE INVENTION

The invention relates to a sub-assembly for rotary and DTH drilling of rock material.

The disclosure further relates to a rock drilling rig and method of absorbing vibrations in drilling. The field of the invention is to be found in the relevant document CA2638497A1.

### BACKGROUND OF THE INVENTION

In mines and at other work sites different type of rock drilling rigs are used for drilling drill holes to rock surfaces. In rotary drilling and DTH drilling sub-assemblies are implemented between a rotation device and a drilling tool. The sub assembly is subjected to axial and torsional shocks during the drilling wherefore different constructional solutions for dampening the shocks are presented. However, the known solutions have shown some disadvantages, and especially relating durability of dampening components.

### SUMMARY OF THE INVENTION

An object of the disclosure is to provide a novel and improved sub-assembly, rock drilling rig, and a method for absorbing vibrations in rotary drilling.

The sub-assembly according to the invention is defined by features of the independent apparatus claim.

The rock drilling rig according to the invention is characterized by the characterizing features of claim 11.

### TECHNICAL FIELD OF THE INVENTION

The invention relates to a sub-assembly for rotary and DTH drilling of rock material.

The invention further relates to a rock drilling rig and method of absorbing vibrations in drilling. The field of the invention is defined more specifically in the preambles of the independent claims.

### BACKGROUND OF THE INVENTION

In mines and at other work sites different type of rock drilling rigs are used for drilling drill holes to rock surfaces. In rotary drilling and DTH drilling sub-assemblies are implemented between a rotation device and a drilling tool. The sub assembly is subjected to axial and torsional shocks during the drilling wherefore different constructional solutions for dampening the shocks are presented. However, the known solutions have shown some disadvantages, and especially relating durability of dampening components.

Known sub-assemblies for rock drilling are disclosed in CA2638497 and US4759738.

### SUMMARY OF THE INVENTION

An object of the invention is to provide a novel and improved sub-assembly, rock drilling rig for absorbing vibrations in rotary drilling.

The sub-assembly according to the invention is characterized by the features of the first independent apparatus claim.

An idea of the disclosed solution is that a sub-assembly, which is configured to transmit torque and axial forces between a rotating head and a drilling tool, comprises an axial floating arrangement for providing an allowed limited axial relative movement between a first coupling element and a second coupling element. The axial floating arrangement comprises several axial drive pins for transmitting the torque. First ends the mentioned drive pins are mounted immovably and second ends are mounted with clearances. Then the drive pins can bend in relation to their first ends under torsional shocks. The drive pins serve as torsional dampening elements and can absorb torsional shocks. In other words, each of the drive pins have the first end with fixed mounting and the second end with loose mounting, whereby the drive pins are subjected to cantilever bending when the sub-assembly is subjected to sudden changes in torsional forces. Thus, the drive pins are not only transmission elements but also part of the torsional cushion arrangement.

An advantage of the disclosed solution is that the drive pins serve as metallic pin-like torque dampeners which are durable and are service free. A further advantage is that the disclosed structure is relatively simple and inexpensive to manufacture.

Moreover, the disclosed sub-assembly can be implemented in a versatile manner in different rotation heads and rock drilling units.

According to an embodiment, the sub-assembly may alternatively be called as a shock sub, a shock absorber, a floating spindle, or a floating cushion sub.

According to an embodiment, magnitudes of the clearances at the second ends of the drive pins are dependent on the structural design and magnitudes of the torsional forces being transmitted.

According to an embodiment, the drive pins serve as metallic spring elements. In other words, the drive pins may operate as a kind of spring dampeners or metallic bendable transmission elements.

According to an embodiment, the drive pins are made of spring steel. In other words, the material of the drive pins is selected in respect to the intended use as a bendable machine element. The spring steel is durable against permanent bending and thereby tolerates well repetitive loadings without being permanently deformed. Typically, the spring steel is known as an alloy that can withstand intense twisting and bending without becoming distorted. The spring steel is resilient and pliable, yet durable, which is perfect for this particular use in the drive pins. The drive pins made of spring steel can be bent and yet they will return to their original shape. This characteristic is commonly known as high yield strength.

The torque is configured to be transmitted between the drive pins and the second coupling element directly by means of their contact surfaces. In other words, there is metal to metal contact without separate dampening elements between the drive pins and the second coupling element. This is advantageous for the durability of the structure.

According to an embodiment, number of the drive pins is at least two.

According to an embodiment, number of the drive pins is 8 - 12.

According to an embodiment, the implemented several drive pins are spaced evenly around the central fluid passageway.

According to an embodiment, the second end portions of the drive pins are provided with cushion rings surrounding the drive pins for assisting the dampening. In other words, the drive pins and the cushion rings can operate together for dampening torque shocks. The cushion rings may dampen torque shocks with lower magnitude. Further, the cushion rings may support the free ends of the drive pins and may thereby prevent possible oscillation of the drive pins and may thus operate together with the drive pins when absorbing vibrations.

According to an embodiment, the cushion rings may be made of resilient cushion material. The resilient cushion material may be suitable polymer material or rubber-type material, for example.

According to an embodiment, the resilient cushion material of the cushion rings may be polyurethane. Polyurethane is durable material, and it has good dampening properties.

According to an embodiment, the axial dampening arrangement comprises a ring-shaped top pad and a ring-shaped bottom pad. The mentioned top and bottom pads are made of polyurethane material.

According to an embodiment, the top and bottom pad of the axial dampening arrangement are alternatively made of rubber-type material, or any other suitable resilient cushion material. One possible material may also be polytetrafluoroethylene (PTFE).

According to an embodiment, the first coupling element comprises a first cover element provided with a protruding adapter pin and a second cover element at an axial distance from the first cover element. A housing element with cylinder-like configuration is arranged between the first cover element and the second cover element for providing a floating space, or float space, for the axial floating arrangement. The second coupling element comprises an adapter housing for receiving a coupling end of the drilling tool and protruding into an opposite direction relative to the adapter pin. The second coupling element further comprises a stem which is arranged inside the housing element and can slide axially inside the floating space. The first cover element is provided with several first blind openings for receiving the first ends of the drive pins. The second cover element is provided several second blind openings for receiving the second ends of the drive pins, whereby the drive pins are mounted between the first and second blind openings. The stem comprises several through openings at the drive pins whereby the drive pins penetrate axially through the stem. A ring-shaped top pad, which is provided with a central opening for the fluid passageway and several radial openings for the drive pins, is located inside the floating space at a side of the first coupling end. And a ring-shaped bottom pad, provided with a central opening for a stem part of the second coupling end and several radial openings for the drive pins, is located inside the floating space at a side of the second coupling end. The axial fluid passageway is a sleeve-like element, or a tube, a first end of which is mounted immovably to the first connecting element and a second end portion is connected slidingly to the second connecting element. Further, the mentioned first blind openings of the first cover element and the first ends of the drive pins have tight fit connections, whereas the second blind openings of the second cover element and the second ends of the drive pins have clearance fit connections.

According to an embodiment, the mentioned second blind openings of the second cover element are provided with cushion space portions provided with cushion rings made of resilient material. In other words, the second blind openings comprise the cushion space portions at their top parts and clearance space portions at their bottom parts.

According to an embodiment, the second ends of the drive pins are provided with separate resilient cushion elements for dampening movements of the second ends. The cushion elements may have ring-shaped configuration or any other shape. A further alternative is to cover the second ends of the drive pins with a layer of resilient material. The resilient material may be polyurethane or rubber-type material. One possible material may also be polytetrafluoroethylene (PTFE).

According to an embodiment, magnitude of the mentioned clearance is 1 - 3 mm.

According to an embodiment, diameter of the drive pin is 25 - 42 mm.

According to an embodiment, magnitude of the mentioned clearance is 1 mm and diameter of the drive pin is 35mm or 42 mm.

According to an embodiment, the disclosed solution relates also to a rock drilling rig for drilling drill holes to a rock surface. The rock drilling rig comprises: a movable carrier; at least one drilling mast; a drilling unit comprising a feed device for moving the drilling unit on the drilling mast in a drilling direction and return direction, and a rotating head for rotating a drilling tool around its longitudinal axis; a sub-assembly coupled between the rotating head and the drilling tool for transmitting axial forces and torque between the rotating head and the drilling tool, and wherein the sub-assembly is configured to allow axial floating between the rotating head and the drilling tool and to absorb axial and torsional shocks. Further, the sub-assembly is in accordance with the features and embodiments disclosed in this document.

According to an embodiment, the rock drilling rig is intended for rotary drilling. In the rotary drilling no impact devices are utilized in rock breaking.

According to an embodiment, the rock drilling rig is intended for down-the-hole drilling (DTH). In the DTH drilling a drill bit end of a rotated drilling tool is provided with an impact device, i.e., the impact device is located at a bottom of the drill hole during the drilling.

According to an embodiment, the drilling mast may be substituted by an articulated drilling boom provided with a feed beam.

According to an embodiment, the disclosed solution relates to a method of absorbing vibrations in rotary drilling. The method comprises: rotating a drilling tool around its longitudinal axis by means of a rotating device; providing a sub-assembly between the rotating device and the drilling tool for allowing axial floating movement between the rotating device and the drilling tool and for transmitting axial forces and torque; transmitting the torque by means of several axial drive pins of the sub-assembly; absorbing axial shocks by means of an axial dampening arrangement of the sub-assembly comprising axial cushion elements; and absorbing torsional shocks by means of a torsional dampening arrangement of the sub-assembly. The method further comprises implementing the drive pins as elements of the torsional dampening arrangement and providing the drive pins cantilever type configuration by mounting their first ends immovably and allowing their opposite second ends to move in transverse direction when torsional shocks are subjected to the sub-assembly. Then the drive pins can bend when subjected to the torsional shocks and absorbing torsional vibrations by material properties of the drive pins. In other words, torsional forces are transmitted through the sub-assembly by means of bendable metallic machine elements which provide shock absorption for the drilling system.

According to an embodiment, the method comprises transmitting the torque forces in the sub-assembly through metal to metal contacting surfaces.

According to an embodiment, not covered by the claims, the method comprises providing the mountings of the second ends of the drive pins with clearances.

According to an embodiment, the method comprises providing the mountings of the second end portions of the drive pins with dedicated dampening rings; and supporting the second ends of drive pins having loose mountings with the dampening rings and absorbing vibrations caused by the movements of the free second ends. In other words, the method comprises dampening torsional vibrations in the sub-assembly by a combined effect of the bending of the drive pins and radial compression of the dampening rings.

The above disclosed embodiments may be combined in order to form suitable solutions having those of the above features that are needed.

### BRIEF DESCRIPTION OF DRAWINGS

Some embodiments are described in more detail in the accompanying drawings, in which
Figure 1 is a schematic side view of a surface rock drilling rig intended for rotary drilling,
Figure 2 is a schematic view of a rock drilling unit suitable for down-the-hole drilling,
Figure 3 is a schematic and cross-sectional side view of a sub-assembly,
Figures 4 is a schematic and partly cross-sectional views of the sub-assembly shown in Figure 3;
Figure 5 is a schematic and cross-sectional view of a detail of a sub-assembly,
Figure 6 is a simplified side view showing bending of drive pins of a sub-assembly, and
Figure 7 is a schematic and exploded view of a sub-assembly and its components.

For the sake of clarity, the figures show some embodiments of the disclosed solution in a simplified manner. In the figures, like reference numerals identify like elements.

### DETAILED DESCRIPTION OF PREFERRED EMBODIMENT OF THE INVENTION

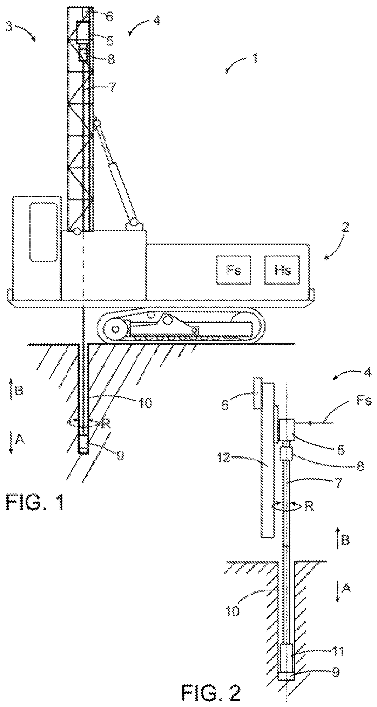

Figure 1 shows a rock drilling rig 1 intended for surface drilling. The rock drilling rig 1 comprises a movable carrier 2 and at least one drilling mast 3 connected to the carrier 2. The mast 3 is provided with a drilling unit 4 provided with a rotating head 5 supported on the mast 3 and being movable in a drilling direction A and return direction B by means of a feed device 6. The rotating head 5 is connected to a drilling tool 7 by means of a sub-assembly 8. The drilling tool 7 is shown in a simplified manner for clarity reasons. The drilling tool 7 may comprise one or more tubular elongated elements and a drill bit 9 at its distal end. The rotating head 5 rotates R the drilling tool 7 around its longitudinal axis and the drilling tool 7 is simultaneously fed towards a rock surface being drilled. This is known as rotary drilling method. Drilling cuttings are flushed by feeding flushing fluid from a flushing system Fs via the drilling tool 7 to a drill hole 10 being drilled so that the drilling cuttings are flushed away from the drill hole 10. The drilling unit 4 may be hydraulic whereby it may be connected to a hydraulic system Hs.

Figure 2 discloses another solution which differs from the one shown in Figure 1 in that there is an impact device 11 mounted between a drill bit 9 and a drilling tool 7. The disclosed solution is intended for a down-the-hole drilling method, known also as DTH-drilling. Also, in this case a sub-assembly 8 is needed between a rotating head 5 and the drilling tool 7. A drilling unit 4 can be mounted movably on a feed beam 12, or in a similar manner as is shown in Figure 1.

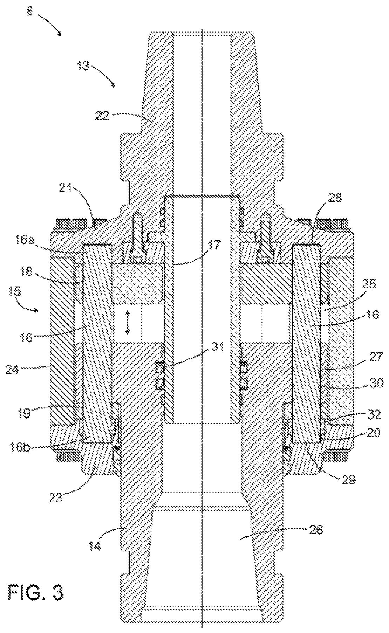

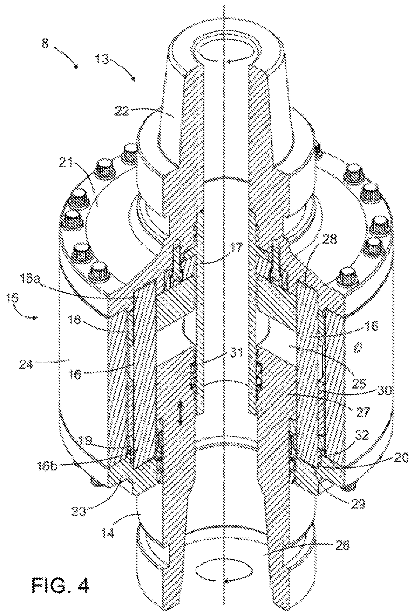

Figures 3 and 4 disclose a sub-assembly 8 comprising a first coupling element 13 at a first end for coupling the sub-assembly 8 to the rotating head, and a second coupling element 14 at an opposite second end for coupling the sub-assembly 8 to the drilling tool. The sub-assembly is also provided with an axial floating arrangement 15 for providing an allowed limited axial relative movement between the first coupling element 13 and the second coupling element 14. The axial floating arrangement comprises several axial drive pins 16 for transmitting torque between the coupling elements 13, 14. There is an axial fluid passageway 17 passing centrally through the axial floating arrangement 15. The sub-assembly 8 comprises an axial dampening arrangement comprising at least one first end cushion element 18 and at least one second end cushion element 19 for dampening axial shocks at extreme axial positions of the axial floating arrangement 15.

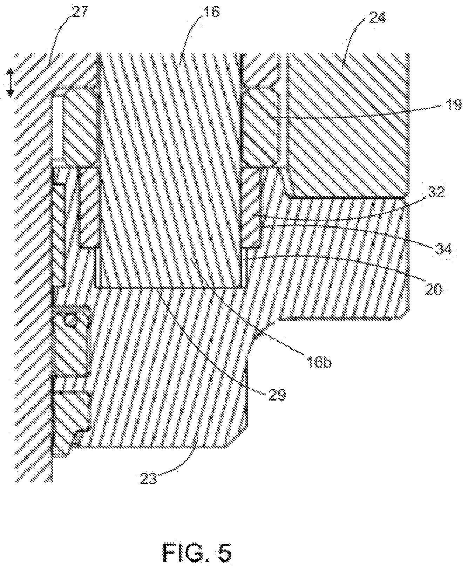

The mentioned drive pins 16 comprise first ends 16a mounted immovably and second ends 16b mounted with clearances 20, which are shown better in Figure 5. The drive pins 16 are configured to be bent in relation to their first ends 16a under torsional shocks. The drive pins 16 serve as torsional dampening elements.

The first coupling element 13 comprises a first cover element 21 provided with a protruding adapter pin 22 and a second cover element 23 at an axial distance from the first cover element 21. A cylinder shaped housing element 24 is arranged between the first cover element 21 and the second cover 23 element for providing a floating space 25 for the axial floating arrangement 15.

The second coupling element 14 comprises an adapter housing 26 for receiving a coupling end of the drilling tool. The adapter housing 26 protrudes into an opposite direction relative to the adapter pin 22. Further, the second coupling element 14 comprises a stem 27 which is arranged inside the housing element 24 and can slide axially inside the floating space 25.

The first cover element 21 is provided with several first blind openings 28 for receiving the first ends 16a of the drive pins 16. The second cover element 23 is provided several second blind openings 29 for receiving the second ends 16b of the drive pins 16. Thereby, the drive pins 16 are mounted between the first and second blind openings 28, 29. The stem 27 comprises several through openings 30 through which the drive pins 16 penetrate axially.

The ring-shaped top pad 18 is provided with a central opening for the fluid passageway 17 and several radial openings for the drive pins 16, and it is located inside the floating space 25 at a side of the first coupling end 13. The ring-shaped bottom pad 19 is provided with a central opening for the stem part 27 of the second coupling end 14 and has several radial openings for the drive pins 16. The bottom pad 19 is located inside the floating space 25 at a side of the second coupling end 14. The axial fluid passageway 17 is a substantially sleeve-like element a first end of which is mounted immovably to the first connecting element 13 and a second end portion is connected slidingly to the second connecting element 14. The stem 27 can slide axially in relation to the tubular fluid passageway 17 and its sealings 31.

The mentioned first blind openings 28 of the first cover element 21 and the first ends 16a of the drive pins 16 have tight fit connections, whereas the second blind openings 29 of the second cover element 23 and the second ends 16b of the drive pins 16 have clearance fit connections. Further, the second end portions 16b are provided with cushion rings 32 surrounding the drive pins 16 and are thereby configured to assist the dampening.

Figure 5 discloses the above mentioned clearance 20 and the cushion ring 32 in an enlarged view. The second blind openings 29 of the second cover element 23 are provided with cushion space portions 34 for receiving the cushion rings 32.

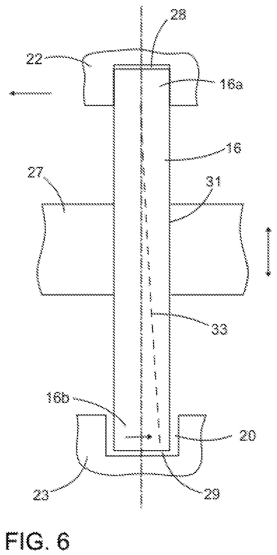

Figure 6 shows in a simplified manner bending 33 of disclosed cantilever supported drive pin 16. When the first cover 22 moves in left direction, the drive pin 16 follows that movement. Movement of the stem 27 is resisted since it is connected to the drilling tool. When sudden high forces occur i.e., the torque shocks exist, then the drive pin 16 bends 33 in a manner typical for a cantilever support, which is fixed at it one end. The cantilever support arrangement requires that the second end 16b of the drive pin 16 can move laterally and this is possible because of the clearance 20. In Figure 6 there is no separate dampening ring at second end portion 16b of the drive pin 16, but it is possible to implement such dampening ring or any other resilient dampening element, dampening mass, or material therein if needed.

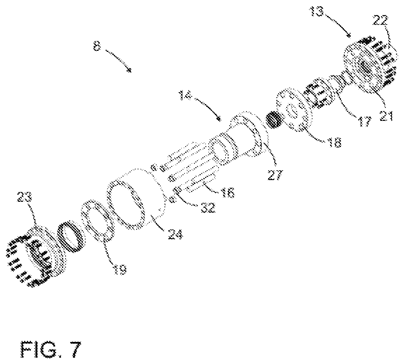

Figure 7 shows some components of a sub-assembly 8. The structure of the sub-assembly 8 is in accordance with the Figures 3 and 4.

The drawings and the related description are only intended to illustrate the idea of the invention. In its details, the invention may vary within the scope of the claims.

## Claims

1. A sub-assembly (8) for a rock drilling unit (4) wherein the sub-assembly (8) is configured to transmit torque and axial forces between a rotating head (5) and a drilling tool (7);
and wherein the sub-assembly (8) comprises:
a first coupling element (13) at a first end of the sub-assembly (8) for coupling the sub-assembly (8) to the rotating head (5);
a second coupling element (14) at an opposite second end of the sub-assembly (8) for coupling the sub-assembly (8) to the drilling tool (7);
an axial floating arrangement (15) for providing an allowed limited axial relative movement between the first coupling element (13) and the second coupling element (14), and comprising several axial drive pins (16) for transmitting the torque;
at least one axial fluid passageway (17) passing centrally through the axial floating arrangement (15);
an axial dampening arrangement comprising at least one first end cushion element (18) and at least one second end cushion element (19) for dampening axial shocks at extreme axial positions of the axial floating arrangement (15); and
a torsional dampening arrangement for absorbing torsional shocks;
wherein the mentioned drive pins (16) comprise first ends (16a) mounted immovably and second ends (16b) mounted with clearances (20), whereby the drive pins (16) are configured to be bent in relation to their first ends (16a) under torsional shocks and the drive pins (16) serve as torsional dampening elements of the mentioned torsional dampening arrangement;
wherein the first coupling element (13) comprises a first cover element (21) provided with a protruding adapter pin (22) and a second cover element (23) at an axial distance from the first cover element (21);
a housing element (24) with cylinder-like configuration is arranged between the first cover element (21) and the second cover element (23) for providing a floating space (25) for the axial floating arrangement (15);
the second coupling element (14) comprises an adapter housing (26) for receiving a coupling end of the drilling tool and protruding into an opposite direction relative to the adapter pin (22), and the second coupling element (14) further comprises a stem (27) which is arranged inside the housing element (24) and is able to slide axially inside the floating space (25);
the first cover element (21) is provided with several first blind openings (28) for receiving the first ends (16a) of the drive pins (16), and the second cover element (23) is provided several second blind openings (29) for receiving the second ends (16b) of the drive pins (16), whereby the drive pins (16) are mounted between the first and second blind openings (28, 29);
the stem (27) comprises several through openings (30) at the drive pins (16) whereby the drive pins (16) penetrate axially through the stem (27);
a ring-shaped top pad (18), which is provided with a central opening for the fluid passageway (17) and several radial openings for the drive pins (16), is located inside the floating space (25) at a side of the first coupling end (13);
a ring-shaped bottom pad (19), provided with a central opening for the stem (27) of the second coupling end (14) and several radial openings for the drive pins (16), is located inside the floating space (25) at a side of the second coupling end (14);
the axial fluid passageway (17) being a sleeve-like element a first end of which is mounted immovably to the first connecting element (13) and a second end portion being connected slidingly to the second connecting element (14);
wherein
the mentioned first blind openings (28) of the first cover element (21) and the first ends (16a) of the drive pins (16) have tight fit connections, whereas the second blind openings (29) of the second cover element (23) and the second ends (16b) of the drive pins (16) have clearance fit connections.

2. The sub-assembly as claimed in claim 1, **characterized in that**
the drive pins (16) serve as metallic spring elements.

3. The sub-assembly as claimed in claim 1 or 2, **characterized in that**
the drive pins (16) are made of spring steel.

4. The sub-assembly as claimed in any one of the preceding claims 1 - 3, **characterized in that**
the torque is configured to be transmitted between the drive pins (16) and the second coupling element (14) directly by means of their contact surfaces.

5. The sub-assembly as claimed in any one of the preceding claims 1 - 4, **characterized in that**
number of the drive pins (16) is 8 - 12 and they are spaced evenly around the central fluid passageway (17).

6. The sub-assembly as claimed in any one of the claims 1 - 5, **characterized in that**
the second end portions (16b) of the drive pins (16) are provided with cushion rings (32) surrounding the drive pins (16) for assisting the dampening.

7. The sub-assembly as claimed in any one of the preceding claims 1 - 6, **characterized in that**
the axial dampening arrangement comprises a ring-shaped top pad (18) and a ring-shaped bottom pad (19); and
the top and bottom pads (18, 19) are made of resilient cushion material.

8. The sub-assembly as claimed in claim 1, **characterized in that**
the second blind openings (29) of the second cover element (23) are provided with cushion space portions (34) provided with cushion rings (32) made of resilient material.

9. The sub-assembly as claimed in claim 7 or 8, **characterized in that** the mentioned resilient material is polyurethane.

10. The sub-assembly as claimed in any one of the preceding claims 1 - 9, **characterized in that** magnitude of the mentioned clearances (20) is 1 - 3 mm.

11. A rock drilling rig (1) for drilling drill holes (10) to a rock surface,
wherein the rock drilling rig (1) comprises:
a movable carrier (2);
at least one drilling mast (3);
a drilling unit (4) comprising a feed device (6) for moving the drilling unit (4) on the drilling mast (3) in a drilling direction (A) and return direction (B), and a rotating head (5) for rotating (R) a drilling tool (7) around its longitudinal axis;
a sub-assembly (8) coupled between the rotating head (5) and the drilling tool (7) for transmitting axial forces and torque between the rotating head (5) and the drilling tool (7), and wherein the sub-assembly (8) is configured to allow axial floating between the rotating head (5) and the drilling tool (7) and to absorb axial and torsional shocks;
**characterized in that**
the sub-assembly (8) is as claimed in any one of the preceding claims 1 - 10.

## Patentansprüche

1. Unterbaugruppe (8) für eine Felsbohreinheit (4), wobei die Unterbaugruppe (8) konfiguriert ist, um Drehmoment und Axialkräfte zwischen einem Drehkopf (5) und einem Bohrwerkzeug (7) zu übertragen;
und wobei die Unterbaugruppe (8) umfasst:
ein erstes Kopplungselement (13) an einem ersten Ende der Unterbaugruppe (8) zum Koppeln der Unterbaugruppe (8) mit dem Drehkopf (5);
ein zweites Kopplungselement (14) am gegenüberliegenden zweiten Ende der Unterbaugruppe (8) zum Koppeln der Unterbaugruppe (8) mit dem Bohrwerkzeug (7);
eine axiale schwebende Anordnung (15) zum Bereitstellen einer zulässigen begrenzten axialen relativen Bewegung zwischen dem ersten Kopplungselement (13) und dem zweiten Kopplungselement (14), und umfassend mehrere axiale Antriebsstifte (16) zur Übertragung von Drehmoment;
mindestens einen axialen Fluiddurchgang (17), der zentral durch die axiale schwebende Anordnung (15) verläuft;
eine axiale Dämpfungsanordnung, die mindestens ein erstes Endpufferelement (18) und mindestens ein zweites Endpufferelement (19) zur Dämpfung axialer Stöße an axialen Extrempositionen der axialen schwebenden Anordnung (15) umfasst; und
eine Torsionsdämpfungsanordnung zur Absorption von Torsionsstößen;
wobei die erwähnten Antriebsstifte (16) erste Enden (16a), die unbeweglich montiert sind, und zweite Enden (16b) umfassen, die mit Freiraum (20) montiert sind, wodurch die Antriebsstifte (16) konfiguriert sind, um sich unter Torsionsstößen in Bezug auf ihre ersten Enden (16a) zu biegen, und die Antriebsstifte (16) als Torsionsdämpfungselemente der erwähnten Torsionsdämpfungsanordnung dienen;
wobei das erste Kopplungselement (13) ein erstes Abdeckelement (21), das mit einem hervorstehenden Adapterstift (22) bereitgestellt ist, und ein zweites Abdeckelement (23) in einem axialen Abstand vom ersten Abdeckelement (21) umfasst;
ein Gehäuseelement (24) mit zylinderähnlicher Konfiguration zwischen dem ersten Abdeckelement (21) und dem zweiten Abdeckelement (23) zum Bereitstellen eines schwebenden Raumes (25) für die axiale schwebende Anordnung (15) angeordnet ist;
das zweite Kopplungselement (14) ein Adaptergehäuse (26) zur Aufnahme eines Kopplungsendes des Bohrwerkzeugs und Hervorstehen in einer entgegengesetzten Richtung in Bezug zum Adapterstift (22) umfasst, und das zweite Kopplungselement (14) weiter einen Schaft (27) umfasst, der im Inneren des Gehäuseelements (24) angeordnet ist und imstande ist, axial innerhalb des schwebenden Raumes (25) zu gleiten;
das erste Abdeckelement (21) mit mehreren ersten Sacköffnungen (28) zur Aufnahme der ersten Enden (16a) der Antriebsstifte (16) bereitgestellt ist, und das zweite Abdeckelement (23) mit mehreren zweiten Sacköffnungen (29) zur Aufnahme der zweiten Enden (16b) der Antriebsstifte (16) bereitgestellt ist, wodurch die Antriebsstifte (16) zwischen der ersten und zweiten Sacköffnung (28, 29) montiert sind;
der Schaft (27) mehrere Durchgangsöffnungen (30) an den Antriebsstiften (16) umfasst, wodurch die Antriebsstifte (16) axial durch den Schaft (27) hindurch eindringen;
eine ringförmige obere Auflage (18), die mit einer zentralen Öffnung für den Fluiddurchgang (17) und mehreren radialen Öffnungen für die Antriebsstifte (16) bereitgestellt ist, sich innerhalb des schwebenden Raumes (25) an einer Seite des ersten Kopplungsendes (13) befindet;
eine ringförmige untere Auflage (19), die mit einer zentralen Öffnung für den Schaft (27) des zweiten Kopplungsendes (14) und mehreren radialen Öffnungen für die Antriebsstifte (16) bereitgestellt ist, sich innerhalb des schwebenden Raumes (25) an einer Seite des zweiten Kopplungsendes (14) befindet;
der axiale Fluiddurchgang (17) ein hülsenartiges Element ist, dessen erstes Ende unbeweglich am ersten Verbindungselement (13) montiert ist und ein zweites Ende gleitend mit dem zweiten Verbindungselement (14) verbunden ist;
wobei die erwähnten ersten Sacköffnungen (28) des ersten Abdeckelelements (21) und die ersten Enden (16a) der Antriebsstifte (16) Formschlussverbindungen aufweisen, während die zweiten Sacköffnungen (29) des zweiten Abdeckelelements (23) und die zweiten Enden (16b) der Antriebsstifte (16) Freiraumschlussverbindungen aufweisen.

2. Unterbaugruppe nach Anspruch 1, **dadurch gekennzeichnet, dass**
die Antriebsstifte (16) als metallische Federelemente dienen.

3. Unterbaugruppe nach Anspruch 1 oder 2, **dadurch gekennzeichnet, dass**
die Antriebsstifte (16) aus Federstahl gefertigt sind.

4. Unterbaugruppe nach einem der vorstehenden Ansprüche 1 - 3, **dadurch gekennzeichnet, dass**
das Drehmoment konfiguriert ist, um zwischen den Antriebsstiften (16) und dem zweiten Kopplungselement (14) direkt mittels deren Kontaktoberflächen übertragen zu werden.

5. Unterbaugruppe nach einem der vorstehenden Ansprüche 1 - 4, **dadurch gekennzeichnet, dass**
eine Anzahl der Antriebsstifte (16) 8 - 12 beträgt und sie gleichmäßig um den zentralen Fluiddurchgang (17) beabstandet sind.

6. Unterbaugruppe nach einem der Ansprüche 1 - 5, **dadurch gekennzeichnet, dass**
die zweiten Endabschnitte (16b) der Antriebsstifte (16) mit Pufferringen (32) bereitgestellt sind, die die Antriebsstifte zur Unterstützung der Dämpfung (16) umgeben.

7. Unterbaugruppe nach einem der vorstehenden Ansprüche 1 - 6, **dadurch gekennzeichnet, dass**
die axiale Dämpfungsanordnung eine ringförmige obere Auflage (18) und eine ringförmige untere Auflage (19) umfasst; und
die obere und untere Auflage (18, 19) aus elastischem Puffermaterial gefertigt sind.

8. Unterbaugruppe nach Anspruch 1, **dadurch gekennzeichnet, dass**
die zweiten Sacköffnungen (29) des zweiten Abdeckelements (23) mit Pufferzwischenraumabschnitten (34) bereitgestellt sind, die mit Pufferringen (32) bereitgestellt sind, die aus elastischem Material gefertigt sind.

9. Unterbaugruppe nach Anspruch 7 oder 8, **dadurch gekennzeichnet, dass** das erwähnte elastische Material Polyurethan ist.

10. Unterbaugruppe nach einem der vorstehenden Ansprüche 1 - 9, **dadurch gekennzeichnet, dass** eine Größe der erwähnten Freiräume (20) 1 - 3 mm beträgt.

11. Felsbohrgestell (1) zum Bohren von Bohrlöchern (10) in eine Felsoberfläche,
wobei das Felsbohrgestell (1) umfasst:
einen beweglichen Träger (2);
mindestens einen Bohrmasten (3);
eine Bohreinheit (4), die eine Zuführungsvorrichtung (6) zum Bewegen der Bohreinheit (4) auf dem Bohrmasten (3) in einer Bohrrichtung (A) und Rückwärtsrichtung (B), und einen Drehkopf (5) zum Drehen (R) eines Bohrwerkzeugs (7) um seine Längsachse umfasst;
eine Unterbaugruppe (8), die zwischen dem Drehkopf (5) und dem Bohrwerkzeug (7) zur Übertragung von Axialkräften und Drehmoment zwischen dem Drehkopf (5) und dem Bohrwerkzeug (7) gekoppelt ist, wobei die Unterbaugruppe (8) konfiguriert ist, um axiales Schweben zwischen dem Drehkopf (5) und dem Bohrwerkzeug (7) zu ermöglichen und um axiale und Torsionsstöße zu absorbieren;
**dadurch gekennzeichnet, dass**
die Unterbaugruppe (8) nach einem der vorstehenden Ansprüche 1 - 10 ist.

## Revendications

1. Sous-ensemble (8) pour une unité de forage de roche (4), dans lequel le sous-ensemble (8) est configuré pour transmettre un couple et des forces axiales entre une tête rotative (5) et un outil de forage (7) ;
et dans lequel le sous-ensemble (8) comprend :
un premier élément couplant (13) à une première extrémité du sous-ensemble (8) pour coupler le sous-ensemble (8) à la tête rotative (5) ;
un second élément couplant (14) à une seconde extrémité opposée du sous-ensemble (8) pour coupler le sous-ensemble (8) à l'outil de forage (7) ;
un agencement flottant axial (15) pour fournir un mouvement relatif axial limité autorisé entre le premier élément couplant (13) et le second élément couplant (14), et comprenant plusieurs broches d'entraînement axiales (16) pour transmettre le couple ;
au moins un passage de fluide axial (17) passant au centre de l'agencement flottant axial (15) ;
un agencement atténuant axial comprenant au moins un premier élément amortissant d'extrémité (18) et au moins un second élément amortissant d'extrémité (19) pour atténuer des chocs axiaux à des positions axiales extrêmes de l'agencement flottant axial (15) ; et
un agencement atténuant de torsion destiné à absorber les chocs de torsion ;
dans lequel les broches d'entraînement mentionnées (16) comprennent des premières extrémités (16a) montées de manière immobile et des secondes extrémités (16b) montées avec des jeux (20), de sorte que les broches d'entraînement (16) soient configurées pour être pliées par rapport à leurs premières extrémités (16a) sous l'effet de chocs de torsion et les broches d'entraînement (16) servent d'éléments atténuant de torsion de l'agencement atténuant de torsion mentionné ;
dans lequel le premier élément couplant (13) comprend un premier élément de recouvrement (21) pourvu d'une broche d'adaptation saillante (22) et un second élément de recouvrement (23) à une distance axiale du premier élément de recouvrement (21) ;
un élément logeant (24) de configuration cylindrique est agencé entre le premier élément de recouvrement (21) et le second élément de recouvrement (23) pour fournir un espace flottant (25) pour l'agencement flottant axial (15) ;
le second élément couplant (14) comprend un boîtier adaptateur (26) destiné à recevoir une extrémité de couplage de l'outil de forage et faisant saillie dans une direction opposée par rapport à la broche d'adaptation (22), et le second élément couplant (14) comprend en outre une tige (27) qui est agencée à l'intérieur de l'élément logeant (24) et qui peut glisser axialement à l'intérieur de l'espace flottant (25) ;
le premier élément de recouvrement (21) est pourvu de plusieurs premières ouvertures borgnes (28) destinées à recevoir les premières extrémités (16a) des broches d'entraînement (16), et le second élément de recouvrement (23) est pourvu de plusieurs seconds ouvertures borgnes (29) destinées à recevoir les seconds extrémités (16b) des broches d'entraînement (16), les broches d'entraînement (16) étant montées entre les première et seconde ouvertures borgnes (28, 29) ;
la tige (27) comprend plusieurs ouvertures traversantes (30) au niveau des broches d'entraînement (16) par lesquelles les broches d'entraînement (16) pénètrent axialement à travers la tige (27) ;
un coussinet supérieur annulaire (18), pourvu d'une ouverture centrale pour le passage du fluide (17) et de plusieurs ouvertures radiales pour les broches d'entraînement (16), est situé à l'intérieur de l'espace flottant (25) d'un côté de la première extrémité de couplage (13) ;
un coussinet inférieur annulaire (19), pourvu d'une ouverture centrale pour la tige (27) de la seconde extrémité de couplage (14) et de plusieurs ouvertures radiales pour les broches d'entraînement (16), est situé à l'intérieur de l'espace flottant (25) d'un côté de la seconde extrémité de couplage (14) ;
le passage de fluide axial (17) étant un élément en forme de manchon dont une première extrémité est montée de manière immobile sur le premier élément de liaison (13) et une seconde partie d'extrémité étant reliée de manière coulissante au second élément de liaison (14) ;
dans lequel les premières ouvertures borgnes mentionnées (28) du premier élément de recouvrement (21) et les premières extrémités (16a) des broches d'entraînement (16) présentent des liaisons à ajustement serré, tandis que les secondes ouvertures borgnes (29) du second élément de recouvrement (23) et les secondes extrémités (16b) des broches d'entraînement (16) présentent des liaisons à ajustement avec jeu.

2. Sous-ensemble selon la revendication 1, **caractérisé en ce que**
les broches d'entraînement (16) servent d'éléments de ressort métalliques.

3. Sous-ensemble selon la revendication 1 ou 2, **caractérisé en ce que**
les broches d'entraînement (16) sont en acier à ressort.

4. Sous-ensemble selon l'une quelconque des revendications 1-3 précédentes, **caractérisé en ce que**
le couple est configuré pour être transmis entre les broches d'entraînement (16) et le second élément couplant (14) directement au moyen de leurs surfaces de contact.

5. Sous-ensemble selon l'une quelconque des revendications 1-4 précédentes, **caractérisé en ce que**
le nombre de broches d'entraînement (16) est de 8-12 et elles sont espacées uniformément autour du passage de fluide central (17).

6. Sous-ensemble selon l'une quelconque des revendications 1-5, **caractérisé en ce que**
les secondes parties d'extrémité (16b) des broches d'entraînement (16) sont pourvues d'anneaux atténuants (32) entourant les broches d'entraînement (16) pour contribuer à l'amortissement.

7. Sous-ensemble selon l'une quelconque des revendications précédentes 1-6, **caractérisé en ce que**
l'agencement atténuant axial comprend un coussinet supérieur annulaire (18) et un coussinet inférieur annulaire (19) ; et
les coussinets supérieur et inférieur (18, 19) sont constitués d'un matériau atténuant élastique.

8. Sous-ensemble selon la revendication 1, **caractérisé en ce que**
les secondes ouvertures borgnes (29) du second élément de recouvrement (23) sont pourvues de parties d'espace atténuantes (34) pourvues d'anneaux atténuants (32) en matériau élastique.

9. Sous-ensemble selon la revendication 7 ou 8, **caractérisé en ce que** le matériau élastique mentionné est du polyuréthane.

10. Sous-ensemble selon l'une quelconque des revendications précédentes 1-9, **caractérisé en ce que** l'amplitude des jeux mentionnés (20) est de 1-3 mm.

11. Engin de forage de roche (1) pour forer des trous de forage (10) dans une surface rocheuse,
dans lequel l'engin de forage de roche (1) comprend :
un porteur mobile (2) ;
au moins un mât de forage (3) ;
une unité de forage (4) comprenant un dispositif d'alimentation (6) pour déplacer l'unité de forage (4) sur le mât de forage (3) dans une direction de forage (A) et une direction de retour (B), et une tête rotative (5) pour faire tourner (R) un outil de forage (7) autour de son axe longitudinal ;
un sous-ensemble (8) couplé entre la tête rotative (5) et l'outil de forage (7) pour transmettre des forces axiales et un couple entre la tête rotative (5) et l'outil de forage (7), et dans lequel le sous-ensemble (8) est configuré pour permettre un flottement axial entre la tête rotative (5) et l'outil de forage (7) et pour absorber les chocs axiaux et de torsion ;
**caractérisé en ce que**
le sous-ensemble (8) est selon l'une quelconque des revendications précédentes 1-10.
